# EUROPEAN PATENT SPECIFICATION

(11) **EP 4 450 205 B1**
(45) Date of publication and mention of the grant of the patent: **21.01.2026**
(21) Application number: 24168569.2
(22) Date of filing: 04.04.2024
(51) Int. Cl.: B23K 9/10, B23K 9/095

(54) **TRAVEL SPEED PACING SYSTEM FOR WELDING-TYPE OPERATIONS**
SYSTEM ZUR ÜBERWACHUNG DER GESCHWINDIGKEIT FÜR SCHWEISSVORGÄNGE
SYSTÈME DE RÉGULATION DE LA VITESSE DE DÉPLACEMENT POUR OPÉRATIONS DE SOUDAGE

(30) Priority: 14.04.2023 US 202363496244 P; 27.03.2024 US 202418618632
(43) Date of publication of application: 23.10.2024
(73) Proprietor: Illinois Tool Works Inc., Glenview IL 60025 (US)
(72) Inventor: BECKER, William Joshua, Glenview, 60025 (US); MUSKE, Mitchell James, Glenview, 60025 (US); GILL, Samuel Paul, Glenview, 60025 (US)
(74) Representative: HGF

(56) References cited:
- CA-A1- 3 145 721
- FR-A1- 3 100 978
- US-B2- 10 839 718

## Description

### RELATED APPLICATIONS

The present application claims the benefit of U.S. Provisional Patent Application Serial No. 63/496,244, filed April 14, 2023, entitled "travel speed pacing systems and methods for welding-type operations."

### FIELD OF THE DISCLOSURE

This disclosure relates generally to welding and, more particularly, to travel speed pacing systems and methods for welding-type operations (see, for example, CA 3 145 721 A1).

### BACKGROUND

New and/or inexperienced welders commonly struggle with poor weld quality, due to a lack of understanding on proper welding technique. A common issue is that welders burn through thinner materials due to moving the welding tool with too slow of a travel speed. Additionally, welders may have inconsistent travel speeds, which can reduce the overall quality of the weld.

### SUMMARY

Travel speed pacing systems and methods for welding-type operations are disclosed, substantially as illustrated by and described in connection with at least one of the figures, as set forth more completely in the claims.

### BRIEF DESCRIPTION OF THE DRAWINGS

FIG. 1 is a block diagram of an example welding-type system including a remote wire feeder and configured to provide welding-type output power, in accordance with aspects of this disclosure.
FIG. 2 is a block diagram of another example welding system configured to provide welding-type output power with a welding-type power supply having an integrated wire feeder, in accordance with aspects of this disclosure.
FIG. 3 illustrates an example interface that may implement the interfaces and/or devices of FIGS. 1 and/or 2 to input characteristics of a welding-type operation.
FIGS. 4A and 4B illustrate the use of a stencil to apply regularly spaced markings to a workpiece for a welding-type operation.
FIGS. 4C-4E illustrate output of an example workpiece including marked locations and example indicators corresponding to a target travel speed of a welding-type operation.
FIGS. 5A and 5B illustrate another example interface that may implement the interfaces and/or devices of FIGS. 1 and/or 2 to simulate a travel speed on the interface to provide travel speed guidance.
FIG. 6 is a flowchart representative of example machine readable instructions which may be executed by the example welding-type power supplies and/or external computing devices of FIGS. 1 and/or 2 to provide travel speed guidance.
FIG. 7 is a block diagram of an example computing system that may be used to implement the external computing device of FIGS. 1 and/or 2.

The figures are not necessarily to scale. Where appropriate, similar or identical reference numbers are used to refer to similar or identical components.

### DETAILED DESCRIPTION

Prior techniques to improve welder technique with regard to travel speed involve tracking travel speed and providing feedback to the operator. Some techniques are disclosed in U.S. Patent No. 11,014,183, U.S. Patent No. 9,522,437, U.S. Patent No. 9,573,215, and U.S. Patent No. 9.511,443.

In some disclosed example travel speed guidance systems, markings are applied to the workpiece as a series of tick marks at a regular spacing interval. An interface receives inputs identifying characteristics of the welding-type operation and determines an appropriate travel speed. The interface or other device is then controlled to output indicators, such as visual, audio, and/or vibration pulses, at a pulse frequency corresponding to the desired travel speed. As the welder moves the welding-type tool over the workpiece, the rate at which the indicators are output may correspond to, for example, one marking per indicator to provide pacing guidance to the operator.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "welding-type power supply" refers to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

As used herein, the term "remote wire feeder" refers to a wire feeder that is not integrated with the power supply in a single housing.

Disclosed example travel speed pacing systems for welding-type operations include: an interface configured to receive an input describing a characteristic of a welding-type operation; and control circuitry configured to: determine a target travel speed based on the input; determine a target time interval at which the welding-type operation is to traverse locations corresponding to successive ones of a plurality of marked locations on the workpiece of the welding-type operation, the target time interval being based on the target travel speed and a unit distance between the marked locations; and control the interface to output indicators representative of a target time interval.

In some example travel speed pacing systems, the interface is configured to receive as the input at least one of a material thickness of the workpiece, a wire diameter, a wire feed speed, a welding-type output current, or a welding-type output voltage. In some example travel speed pacing systems, the control circuitry is configured to determine the unit distance based on a unit distance input received via the interface. In some example travel speed pacing systems, the unit distance is a predetermined unit distance.

In some example travel speed pacing systems, the indicators comprise audible indicator sounds separated by the target time interval. In some example travel speed pacing systems, the control circuitry is configured to: determine an intermediate interval within the target time interval; and control the interface to output audible intermediate sounds separated by the intermediate interval, in which the audible intermediate sounds are different than the audible indicator sounds.

In some example travel speed pacing systems, the indicators includes visible indicators separated by the target time interval. In some example travel speed pacing systems, the indicators include haptic indicators separated by the target time interval. In some example travel speed pacing systems, the interface is configured to receive the input via communications with an external device.

In some example travel speed pacing systems, the interface is configured to receive the input via obtaining and analyzing an optical image via an optical sensor. In some example travel speed pacing systems, the interface is configured to receive a selection of a welding-type equipment, in which the options for input of the characteristic are determined based on the selection of the welding-type equipment. In some example travel speed pacing systems, the control circuitry is configured to control the interface to communicate the output indicators to an external device.

In some example travel speed pacing systems, the control circuitry is configured to control a welding-type power supply to output the indicators via a welding-type arc. In some example travel speed pacing systems, the control circuitry is configured to: control the interface to display a scale simulation of a simulated joint on a screen of the interface; and control the interface to display a location indicator on the simulated joint and change the position of the location indicator on the simulated joint to match the target travel speed.

Some example travel speed pacing systems further include a stencil having a plurality of apertures corresponding to the plurality of marked locations. In some example travel speed pacing systems, the interface and the control circuitry are implemented on a mobile device or on welding equipment.

Other disclosed example travel speed pacing systems for welding-type operations include: an interface configured to receive an input describing a characteristic of a welding-type operation; first control circuitry configured to determine a target travel speed based on the input; and second control circuitry configured to: determine a target time interval at which the welding-type operation is to traverse locations corresponding to successive ones of a plurality of marked locations on the workpiece of the welding-type operation, the target time interval being based on the target travel speed and a unit distance between the marked locations; and control the interface to output indicators representative of a target time interval.

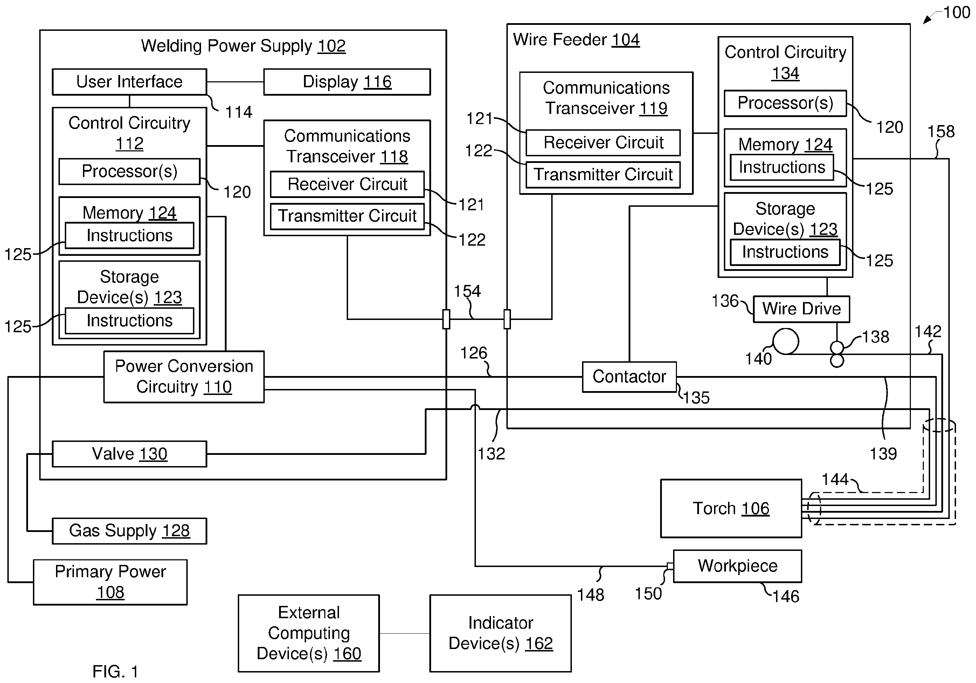

Turning now to the drawings, FIG. 1 is a block diagram of an example welding system 100 having a welding power supply 102, a wire feeder 104, and a welding torch 106. The welding system 100 powers, controls, and supplies consumables to a welding application. The example welding torch 106 is configured for gas metal arc welding (GMAW). In the illustrated example, the power supply 102 is configured to supply power to the wire feeder 104, and the wire feeder 104 may be configured to route the input power to the welding torch 106. In addition to supplying an input power, the wire feeder 104 supplies a filler metal to a welding torch 106 for various welding applications (e.g., GMAW welding, flux core arc welding (FCAW)).

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes a power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with the wire feeder 104 and/or other welding devices within the welding system 100. Further, in some situations, the power supply 102 communicates with the wire feeder 104 and/or other welding devices using a wired connection, such as by using a network interface controller (NIC) to communicate data via a network (e.g., ETHERNET, 10BASE2, 10BASE-T, 100BASE-TX, etc.).

The control circuitry 112 includes at least one processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device and/or logic circuit. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage).

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. The example wire feeder 104 also includes a communications transceiver 119, which may be similar or identical in construction and/or function as the communications transceiver 118. The communications transceivers 118, 119 may be configured for any other type of wireless and/or wired communications.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas conduit 132 (which in some implementations may be packaged with the welding power output) to the wire feeder 104 which provides the shielding gas to the welding application. In some examples, the welding system 100 does not include the gas supply 128, the valve 130, and/or the gas conduit 132. In some other examples, the valve 130 is located in the wire feeder 104, and, the gas supply 128 is connected to the wire feeder 104.

In some examples, the wire feeder 104 uses the welding power to power the various components in the wire feeder 104, such as to power wire feeder control circuitry 134. As noted above, the weld cable 126 may be configured to provide or supply the welding power. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to a weld conductor 139 from the weld cable 126 for the welding application. In some examples, the contactor 135 is an electromechanical device. However, the contactor 135 may be any other suitable device, such as a solid state device, and/or may be omitted entirely and the weld cable 126 is directly connected to the output to the welding torch 106. The wire feeder 104 includes a wire drive 136 that receives control signals from the wire feeder control circuitry 134 to drive rollers 138 that rotate to pull wire off a spool 140 of wire. The wire drive 136 feeds electrode wire to the welding torch 106. The wire is provided to the welding application through a wire liner 142. Likewise, the wire feeder 104 may provide the shielding gas from the gas conduit 132. The example gas conduit 132, the example wire liner 142, and the example conductor 139 are combined in a torch cable 144. The electrode wire, the shield gas, and the power from the weld cable are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

A communication cable 154 connected between the power supply 102 and the wire feeder 104, which enables bidirectional communication between the transceivers 118, 119. The communications transceivers 118 and 119 may communicate via the communication cable 154, via the weld circuit, via wireless communications, and/or any other communication medium. Examples of such communications include weld cable voltage measured at a device that is remote from the power supply 102 (e.g., the wire feeder 104).

The example system 100 may further include one or more external computing devices 160 and/or one or more indicator device(s) 162. The example external computing devices 160 may be a welding pendant, smartphone, tablet computer, desktop or laptop computer, PDA, media device, game console, and/or any other type of computing device separate from the welding-type power supply 102 and wire feeder 104. As discussed in more detail below, the external computing device(s) 160 and/or the interface 114 are configured to provide travel speed guidance to an operator of the system 100. In particular, the example external computing device(s) 160 and/or the interface 114 determines an appropriate travel speed based on characteristics of the welding-type operation, and outputs indicators corresponding to the determined travel speed and based on marked locations on the workpiece 146.

In some examples, the external computing device(s) 160 and/or the power supply 102 communicates with the indicator device(s) 162 to output the indicators. Example indicator devices 162 may include: speakers, headsets, bone conduction devices, and/or other audio output systems; display screens, lights, LEDs, and/or other visual devices; force feedback devices, vibration feedback devices, motive feedback devices, and/or other types of haptic feedback devices; via manipulation of a welding-type arc without affecting the quality of the operation (e.g., outputting sound and/or visual indications by modulating an arc), and/or any other types of feedback devices. The indicator device(s) 162 may be integrated into other equipment, such as portable electronic devices (e.g., smartphones), welding-type power supplies, welding tables, wire feeders, welding helmets, wristwatches, apparel, and/or any other type of wearable or other devices that are observable by the operator.

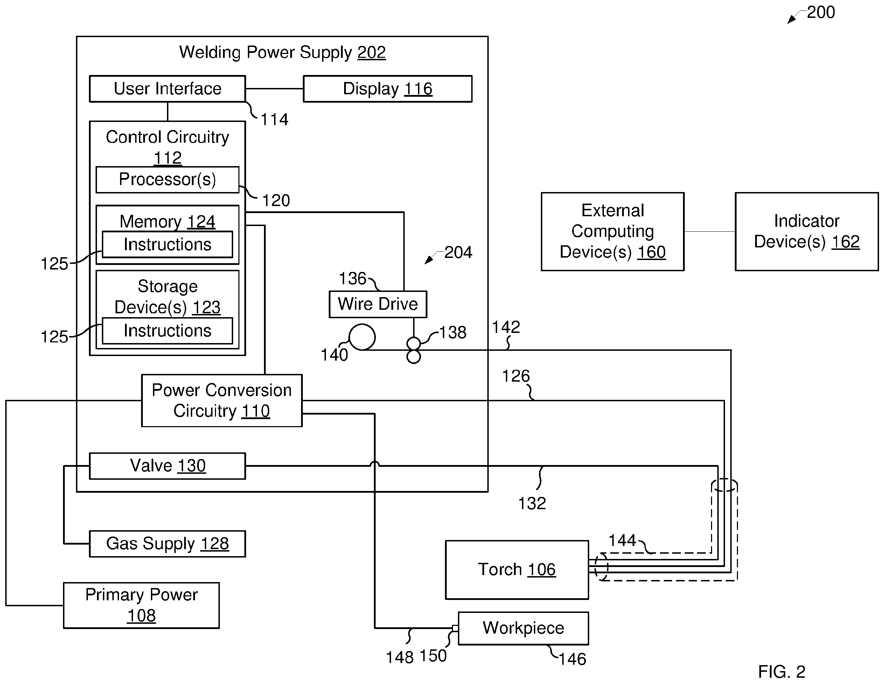

FIG. 2 is a block diagram of another example welding-type system 200 configured to provide power control with a welding power supply 202 having an integrated wire feeder 204. The example welding power supply 202 includes the power conversion circuitry 110, control circuitry 112, the user interface 114, the display 116, the processor(s) 120, the storage devices(s) 123, the memory 124, the instructions 125, and the valve 130 of the example power supply 102 of FIG. 1. The example welding-type system 200 further includes one or more external computing devices 160 and/or one or more indicator device(s) 162.

In contrast with the example system 100, in the example of FIG. 2 the power supply 202 includes the integrated wire feeder 204 instead being connected to a remote wire feeder. The power supply 202 of FIG. 2 outputs welding-type power and electrode wire to the torch 106.

The integrated wire feeder 204 includes the wire drive 136, the drive rollers 138, and the wire spool 140, and feeds the wire through a torch cable 144 to the torch 106.

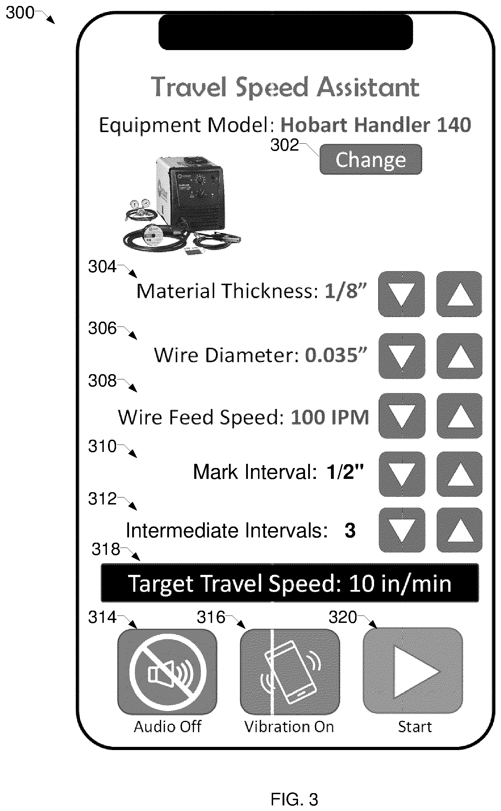

FIG. 3 illustrates an example interface 300 that may implement the interfaces 114 and/or external computing devices 160 of FIGS. 1 and/or 2 to input characteristics of a welding-type operation. The example interface 300 may be implemented on a graphical user interface (GUI) of the welding-type power supplies 102, 202, on an interface of the wire feeder 104, and/or on the external computing device 160, such as a smartphone display.

The example interface 300 includes inputs to provide characteristics and/or parameters of a welding-type operation for which travel speed guidance is to be provided. In the example of FIG. 3, the interface 300 includes an equipment model input 302, a material thickness input 304, a wire size input 306, a wire feed speed input 308, a mark interval input 310, and an intermediate interval selection input 312. The example interface 300 further includes indicator selections, such as an audio indicator selection 314 and a vibration (or haptic) indicator selection 316, which enable or disable audio and/or vibration types of indicators to be output, respectively.

The example inputs 302-316 may be received via an input device of the interface 300, such as a touchscreen, button, knob, and/or any other software and/or hardware input device. Additionally or alternatively, any or all of the inputs 302-316 may be received via communication with another (e.g., external) device. For example, for an interface implemented on the external computing device 160, the inputs 302-316 may be received via the external computing device 160 and/or via communications with a helmet, a power supply, a wire feeder, a pendant, and/or any other welding-type equipment or device. The external computing device 160 implementing the interface 300 may also receive any of the inputs 302-316 via obtaining and analyzing an optical image via an optical sensor (e.g., a camera of a smartphone). For example, a camera may be used to scan a code or marker to identify aspects of the workpiece, wire, welding parameters, and/or any other input characteristics or parameters. The display of the welding-type equipment may render a barcode or other machine readable indicia that encodes welding parameters (e.g., equipment model, workpiece characteristics, wire characteristics, target travel speed, etc.), which can be scanned by the external computing device 160 (e.g., via a camera) to input the encoded data.

The example equipment model input 302 allows an operator to select an equipment model to be used for a welding-type operation. The equipment may include welding power supplies (e.g., GMAW, FCAW, SMAW, GTAW, etc.), wire feeders, plasma cutting power supplies, oxy-fuel cutting and/or welding, air carbon arc gouging, and/or any other type of equipment for performing a welding-type process. Based on the equipment model input 302, the interface 300 determines available options for subsequent parameter selections. The equipment model input 302 may also result in minor changes to the resulting calculation of the target travel speed to account for specific welding characteristics of the equipment model being used. The equipment model input 302 may provide a list of available equipment models from which to select. In some examples, the interface 300 may use a camera or other optical sensor (or use an existing stored image) to allow the user to scan a barcode or QR code on the product to select the specific model. Additionally or alternatively, selection of the welding equipment model may facilitate pairing or other connection between the external computing device 160 and the selected welding equipment (e.g., via Bluetooth, NFC, and/or other wired or wireless communication) to download the welding parameters directly to the external computing device 160 and/or to upload welding-type parameters and/or other settings from the external computing device 160 to the welding equipment.

The material thickness input 304 allows input of the thickness of the workpiece 146. The wire size input 306 allows input of the size (e.g., diameter) of a welding wire to be used in the welding-type operation. The wire feed speed input 308 allows input of the wire feed speed to be used in the welding-type operation (e.g., for GMAW, FCAW operations). In some examples, the selection 302 of the welding equipment may limit the selectable values of the inputs 304-308 based on the capabilities of the selected equipment, and/or may reduce or increase the number of inputs (e.g., remove the wire feed speed input 308 for SMAW, GTAW, and other types of operations, add a process selection for multi-process equipment, etc.). The values for the inputs 304-308 may be in actual units or normalized to a range. In some examples, recommended or default values of some inputs (e.g., the wire feed speed input 308) may be determined or provided based on other inputs (e.g., the material thickness input 304 and the wire size input 306).

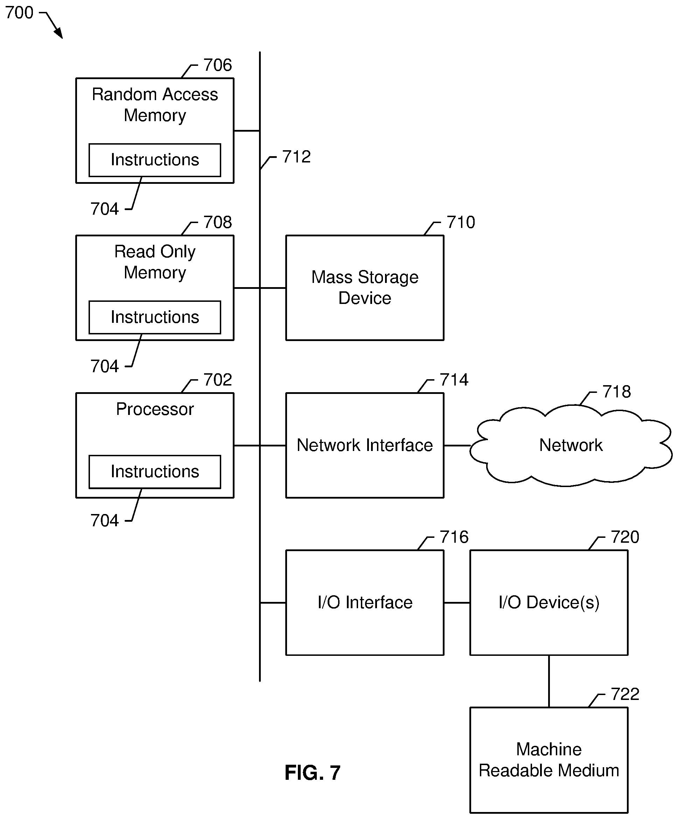

Based on the inputs 302-308, control circuitry (e.g., the control circuitry 112, the processor(s) 120, processor(s) 702 of FIG. 7) determines a target travel speed for the welding-type operation, and displays the target travel speed via the interface 300 (e.g., target travel speed 318). The processor 120, 702 may use a look-up table of travel speed values, and/or calculated using an equation, based on the input parameters (e.g., determined by empirical weld testing). In some examples, the operator may manually change the target travel speed via the interface 300.

The interface 300 and/or the processor 120, 702 further determines a target time interval at which the welding-type operation is to traverse locations on the workpiece 146, in which the locations correspond to marked locations on the workpiece 146. The marked locations may be positive markings (e.g., locations where paint, light, or other type of mark are present) or the absence of markings (e.g., locations other than the designated interval locations are marked, and the interval locations lack the marking).

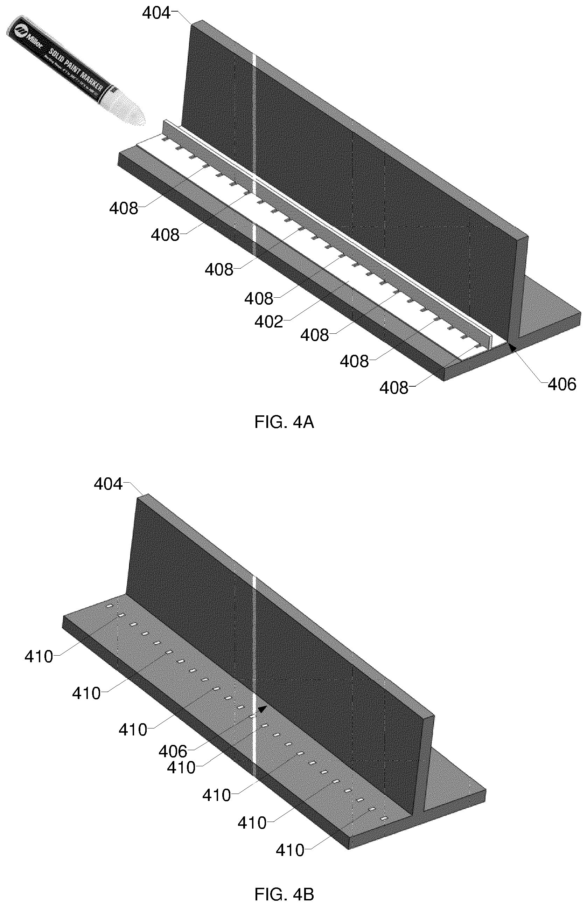

The marked locations may be applied to the workpiece 146 using a stencil, manually, using an automatic applicator, using light, and/or any other marking technique. FIGS. 4A and 4B illustrate the use of a stencil 402 to apply regularly spaced markings to a workpiece 404 for a welding-type operation. The example stencil includes regularly spaced apertures which, when paint or another marking substance is applied, provides regularly spaced markings on the workpiece 400. In the example of FIGS. 4A and 4B, the operator places the stencil 402 adjacent to the joint 406 on the workpiece 404, and uses a marker to trace linear openings 408 in the stencil 402 to draw lines 410 on the workpiece 404. After tracing the openings 408, the stencil 402 is removed to leave the remaining regularly spaced lines 410 on the workpiece 404.

The example stencil 402 may be constructed from of plastic, metal (e.g., mild steel, stainless steel, aluminum), or another material. The stencil 402 may be constructed to have a high melting point, that the stencil can be placed on a recently welded part without melting or other damage. The stencil 402 may be rigid, or flexible so the stencil 402 can bend to follow the contours of a non-linear joint, such as a pipe weld. In some examples, the openings 408 are just wide enough to fit the tip of the marking tool, and/or are offset from the edge of the stencil 402 to avoid interference of the markings (e.g., lines 410) with the joint 406 and the weld bead. The stencil 402 may be implemented as part of, or integrated with, a fillet gauge or plate thickness gauge (e.g., part of a stamped gauge).

Example marking tools may include paint markers (e.g., high-temperature, water based, oil based, acrylic, fine point, wide point, jumbo size), permanent markers, paint crayons, soapstone pens, metal marking paint pens, grease pencils, welder's pencils, scriber's tools, and/or paint rollers. The marking tool may be any desired color, shade, or effect (e.g., metallic). In some examples, a stamp, or stamp roller, and an inkpad are used to apply the markings. The stencil 402 may have thinner openings 408 with wider gaps between the openings 408 to make positively marked locations, or wider openings 408 with thinner gaps between the openings to make negatively marked locations.

In some other examples, instead of physically marking the workpiece 404 with a marking tool, optical markings are created using the stencil 402 as a guide that is coupled to the workpiece 404 during the welding-type operation. For example, a guide stencil can be placed on the workpiece 404, clipped to the workpiece 404, and/or magnetically attached to the workpiece 404. The guide stencil is constructed from a material having a high melting point and resistant to spatter (e.g., aluminum). The guide stencil may be configured with slots which are illuminated by ambient and/or arc light, and the sections between the slots are less reflective or shaded. Either the slots or the sections between the slots may be dimensioned to correspond to the indicators based on the target travel speed.

In still other examples, a laser or other light source may be used to project a line pattern on the workpiece 404 adjacent to the joint 406. The spacing between the lines or dots may be adjustable electronically via a user interface on the laser projector to correspond to the target travel speed, according to a fixed timing of audio and/or vibration indicators. Alternatively, the laser projector may display the lines or dots on a portion of the workpiece 404, and add and remove dots as the operation proceeds. The timing of adding or removing a dot may correspond to the times at which the operator should arrive at a particular line or dot. For example, the laser projector may display the next line or dot to which the operator should be moving and/or the most recent line or dot from which the operator should be moving away, adding the next line or dot in the sequence at the time the operator should be reaching a current line or dot in the sequence.

Returning to FIG. 3, the unit distance between the markings (e.g., lines 410 of FIG. 4B, or other type of marking) may be input via the mark interval input 310. In other examples, the unit distance between the markings is a predetermined distance that is obtained via a designated stencil or other marking device, and/or is obtained via scanning the stencil 402 and/or the markings 410 with a camera.

Based on the input or determined unit distance and based on the target travel speed, the processor 120, 702 of FIGS. 1, 2, and/or 7 determines a target time interval between successive ones of the marked locations. The processor 120, 702 of FIGS. 1, 2, and/or 7 controls one or more output devices (e.g., the indicator device(s) 162 of FIGS. 1 and 2) to output an indication to represent the target time interval. For example, for a determined target time interval of three seconds, the processor 120, 702 of FIGS. 1, 2, and/or 7 controls the indicator device(s) 162 to output a visual, audio, haptic, and/or other indication every three seconds. The goal of the operator is to move the welding-type tool along the joint to locations corresponding to successive markings at a speed that matches the indications. By observing the relationship between the output notifications and the position of the welding-type tool with reference to the markings, the operator can better match the actual travel speed of the welding-type tool to the determined target travel speed.

In some examples, the processor 120, 702 of FIGS. 1, 2, and/or 7 controls the indicator device(s) 162 to output only indications that correspond to markings. In other examples, the processor 120, 702 of FIGS. 1, 2, and/or 7 may output the indications that correspond to markings as interval indicators, and determine intermediate indicators between the interval indicators to further aid the operator in maintaining a consistent travel speed. For example, interval timing that is several seconds apart may be more difficult for an operator to establish a consistent cadence. By including one or more intermediate indicators between the interval indicators (e.g., between the markings), the operator may be able to better pace the actual travel speed of the welding-type tool.

The example intermediate indicators may be the same or different from the interval indicators. The interval indicators may be relatively more or less pronounced than the intermediate indicators, and/or the interval indicators may have a different quality than the intermediate indicators. As an example, using three intermediate indicators between each interval indicator, a sequence of audible indicators may include: "pop" (interval indicator), "tick, tick, tick" (three intermediate indicators), "pop, tick, tick, tick." In such an example, the "pop" interval indicators are separated by the determined target time interval, and correspond to the welding-type tool being positioned at a same location with respect to each successive marking at the target travel speed. The "tick" intermediate indicators are evenly timed between the "pop" interval indicators. The example intermediate interval selection input 312 allows for selection of a number of intermediate indicators between each interval indicator.

Returning to FIG. 3, the audio indicator selection 314 and a vibration (or haptic) indicator selection 316 enables the operator to select one or more modes of the indicators output via the indicator device(s) 162 and/or the interface 114 of FIGS. 1 and/or 2. By selecting or deselecting the audio indicator selection 314 and a vibration indicator selection 316, the operator can cause the processor 120, 702 to enable or disable corresponding types of indicators.

The example interface 300 further includes a start button 320, which causes the interface 300 to begin outputting the interval indicators (and intermediate indicators, if selected) based on the determined target time interval. In some examples, the interface 300 provides a pre-weld countdown to enable the operator to correctly time the indicators to the markings.

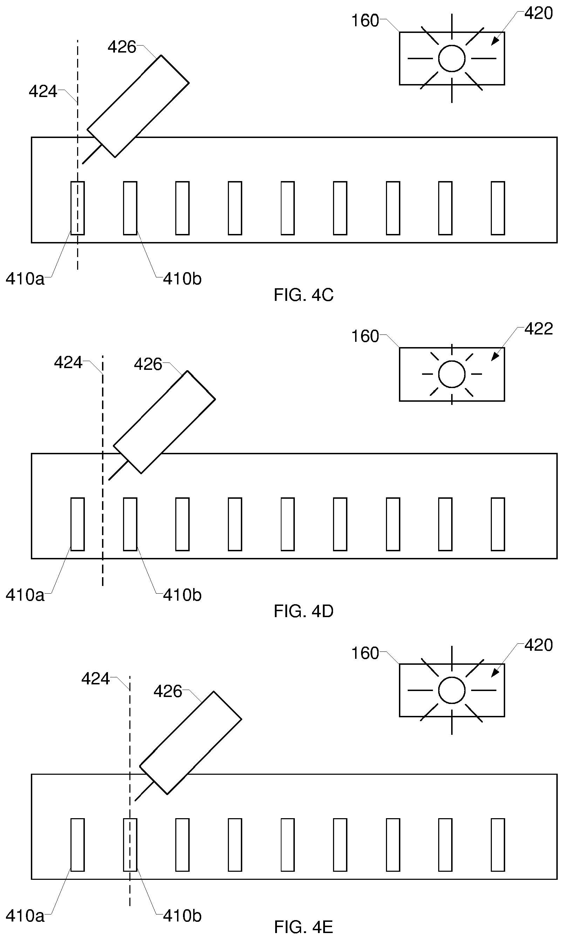

FIGS. 4C-4E illustrate output of the example workpiece 404 including the marked locations 410 of FIG. 4B, and example indicators 420, 422 corresponding to a target travel speed of a welding-type operation. The indictors 420, 422 are output by the example indicator device(s) 162 of FIGS. 1 and/or 2, and represent any combination of audio, visual, haptic, and/or other forms of operator-observable output.

FIG. 4C illustrates the welding-type operation at a first example time, at which the location 424 of a welding-type tool 426 corresponds to a first example marking 410a. The example welding-type tool 426 may be the welding torch 106 of FIGS. 1 and/or 2, a plasma cutting torch, an oxy fuel cutting or welding torch, and/or any other welding-type tool. The indicator device 162 outputs an interval indicator 420 as a higher intensity indicator.

FIG. 4D illustrates the welding-type operation at a second example time, at which the location 424 of the welding-type tool 426 is between the first marking 410a and a second example marking 410b. The second time depicted in FIG. 4D corresponds to an intermediate interval at half of the target time interval between successive interval indicators 420 (e.g., half the distance between the first marking 410a and the second marking 410b at the target travel speed), and the indicator device 162 outputs an intermediate indicator 422 as a lower intensity indicator.

FIG. 4E illustrates the welding-type operation at a third example time, at which the location 424 of the welding-type tool 426 is at the second example marking 410b. The second time depicted in FIG. 4E corresponds to the next interval indicator after the interval indicator depicted in FIG. 4C, and the indicator device 162 outputs another interval indicator 420 as a lower intensity indicator. At the target travel speed between the first and second interval indicators, the location of the welding-type tool 426 has moved from the location of the first marking 410a to the location of the second marking 410b, or an equal offset from each of the first and second markings 410a, 410b.

When the feedback is active, the Start button 320 may be changed to a Stop button to end the travel speed guidance indicators.

In some examples, portions of the interface 302 are partially implemented on the external computing device 160, such as a smartphone or other operator device. In such examples, the operator may input the characteristics of the welding-type operation on a first interface 302, such as on the welding-type power supply 102, 202, which determines a target travel speed 318 based on the inputs. The operator then transfers or inputs the determined target travel speed 318, the mark interval input 310, and the intermediate interval selection 312 to the external computing device 160, which determines (e.g., via processor 702) the target time interval and/or controls the output of the indicator(s) 420, 422 (e.g., via the indicator device(s) 162).

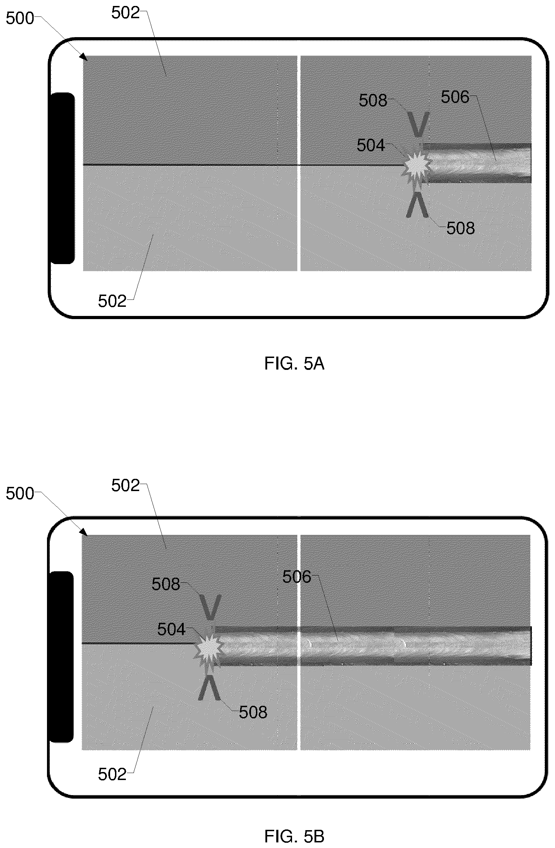

FIGS. 5A and 5B illustrate another example interface 500 that may implement the interfaces 114 and/or external computing devices 160 of FIGS. 1 and/or 2 to simulate a travel speed on the interface 500 to provide travel speed guidance. The example interface 500 may be used in conjunction with, or separate from, the interface 300 and the output indicators.

After determining a target travel speed (e.g., using the characteristic inputs described above with reference to FIG. 3), the interface 500 displays a scale image of a workpiece 502 along which a simulated arc 504 and/or bead 506 travel at the determined travel speed. The example interface 500 may automatically determine the actual size (e.g., in inches or centimeters) of the display screen to provide an accurate travel speed in inches per minute. Alternatively, the operator may select a device type and/or model from a menu to look up the screen size. In some examples, the display may render a virtual ruler based on the determined screen size to allow the user to verify that the determined dimensions match the real-world dimensions. The user may fine-tune the scaling if necessary.

The operator may specify a handedness (e.g., right handed or left handed) and push or drag travel angle to determine the rendered travel direction of the weld (from left to right or right to left).

When the simulated welding-type operation is defined on the interface 500, a virtual workpiece and joint are displayed. If the operator is using a welding-type tool (e.g., to perform muscle memory training at the determined travel speed), a warning message may be displayed to ensure the welding equipment is turned off, and/or the external computing device 160 may communicate with the welding-type power supply 102 to command the power source to disable welding before performing the simulation (e.g., to avoid unintended arcing).

When the simulated operation begins, the simulated weld arc 504 (or other simulated operation) is shown moving across the interface 500 at the target travel speed. The dimensions of the virtual weld bead 506 also match the desired weld size based on the selected or determined weld parameters. The example interface 500 may further include guiding indicators 508 (e.g., arrows) shown moving at the same speed as the simulated weld arc 504. The operator may practice moving the welding-type tool at the target travel speed by matching the speed at which the simulated weld arc 504 moves across the screen.

After the virtual weld runs across the entire length of the interface 500, the simulated welding operation may automatically restart, or may automatically end.

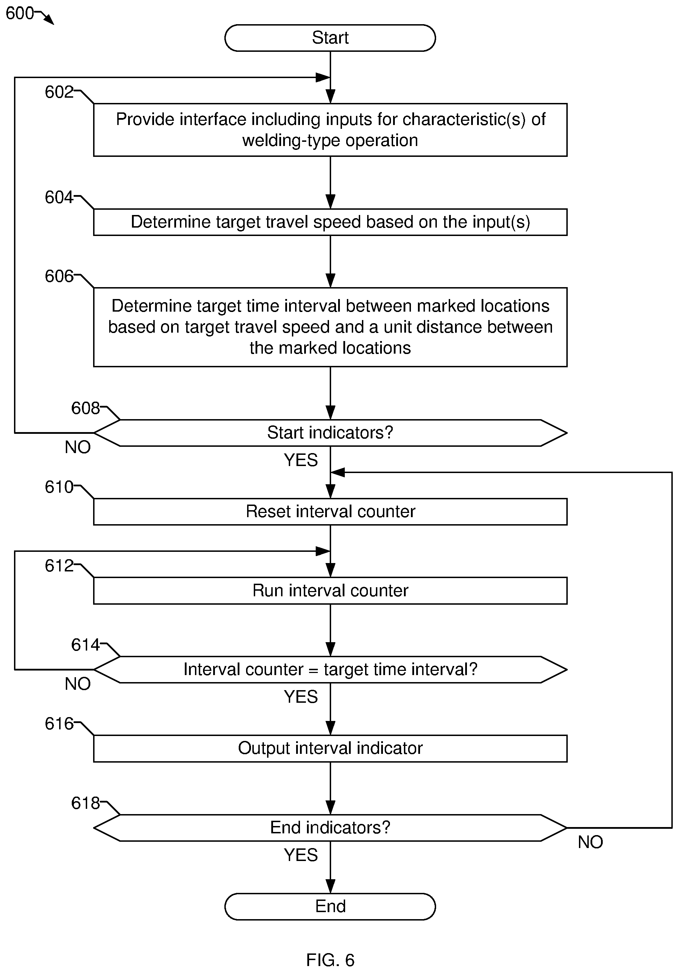

FIG. 6 is a flowchart representative of example machine readable instructions 600 which may be executed by the example welding-type power supplies 102, 202 and/or external computing devices 160 of FIGS. 1 and/or 2 to provide travel speed guidance. The example instructions 600 are discussed below with reference to the interface 300 and the external computing system 160 of FIG. 1, but may be performed by other devices.

At block 602, the external computing device 160 (e.g., via processor 702 of FIG. 7) provides an interface (e.g., the interface 300 of FIG. 3) including inputs for characteristic(s) of a welding-type operation (e.g., inputs 304-308 of FIG. 3). For example, the interface 300 may include inputs for a material thickness of the workpiece, a wire diameter, a wire feed speed, a welding-type output voltage, and/or other characteristics and/or parameters. In some examples, the characteristics for which inputs are provided may be based on a selected equipment.

At block 604, the external computing device 160 determines a target travel speed based on the input(s). For example, the processor 702 may look up a travel speed in a lookup table or database based on the input(s), query a server with the inputs to receive the target travel speed, and/or calculate the target travel speed using an equation or algorithm.

At block 606, the external computing device 160 determines a target time interval between marked locations based on the target travel speed and based on a unit distance between the marked locations. The unit distance may be a predetermined unit distance, or may be determined based on a mark interval input 310 via the interface 300.

At block 608, the external computing device 160 determines whether to start outputting indicators. For example, the external computing device 160 may determine whether a start button 320 has been pushed on the interface 300, and/or whether another trigger signal has been received (e.g., from a trigger of the welding torch 106, from an input device of a welding-type tool, from an ancillary device such as a foot pedal, etc.). Start and/or end signals may also be received via a sensor. For example, an optical sensor may detect arc light (e.g., via the helmet or other device proximate the welding-type operation), and/or the external computing device 160 may include a microphone which detects the presence of arc sounds and/or end voice commands from the operator. If the indicators are not started (block 608), control returns to block 602 to continue displaying the interface 300.

When the indicators are started (block 608), at block 610 the external computing device 160 resets an interval counter (e.g., to an initial value). The interval counter may be a timer or other clock. At block 612, the external computing device 160 runs the interval counter.

At block 614, the external computing device 160 determines whether the interval counter is equal to an expiration of the target time interval. For example, the interval counter may count down from an initial value (e.g., the target time interval) to zero (or other end value), or count up from zero (or other initial value) to the target time interval (or other end value), such that the time from the initial value to the end value corresponds to the target time interval. If the interval counter does not equal an expiration of the target time interval (block 614), control returns to block 612 to continue running the interval counter.

When the interval counter is equal to an expiration of the target time interval (block 614), at block 616 the external computing device 160 controls the indicator device(s) 162 to output an interval indicator. The interval indicator may be visual, audible, haptic, and/or any other type of observable feedback, and may be implemented using the indicator device(s) 162 integrated into the external computing device 160 and/or separate from the external computing device 160.

At block 618, the external computing device 160 determines whether to end output of the indicators. For example, the external computing device 160 may receive an ending signal via the interface 300 and/or an end signal (or lack of an "on" signal) via a same equipment as a start signal was received. If the indicators are not ending (block 618), control returns to block 610 to reset the interval counter.

When the indicators are to end (block 618), the example instructions 600 end.

FIG. 7 is a block diagram of an example computing system 700 that may be used to implement the external computing device(s) 160, the interface 300, and/or the interface 500 of FIGS. 1, 2, 3, and/or 5. The example computing system 700 of FIG. 7 may be a welding device, a general-purpose computer, a laptop computer, a tablet computer, a mobile device, a server, and/or any other type of computing device.

The example computing system 700 of FIG. 7 includes a processor 702 or other control circuitry. The example processor 702 may be any general purpose central processing unit (CPU) from any manufacturer. In some other examples, the processor 702 may include one or more specialized processing units, such as RISC processors with an ARM core, graphic processing units, digital signal processors, and/or system-on-chips (SoC). The processor 702 executes machine readable instructions 704 that may be stored locally at the processor (e.g., in an included cache or SoC), in a random access memory 706 (or other volatile memory), in a read only memory 708 (or other non-volatile memory such as FLASH memory), and/or in a mass storage device 710. The example mass storage device 710 may be a hard drive, a solid state storage drive, a hybrid drive, a RAID array, and/or any other mass data storage device. In some examples, the instructions 600 of FIG. 6 may be implemented using the machine readable instructions 704 stored in one or more of the random access memory 706, the read only memory 708, the mass storage device 710, and/or other storage device, and executed via the processor 702.

A bus 712 enables communications between the processor 702, the RAM 706, the ROM 708, the mass storage device 710, a network interface 714, and/or an input/output interface 716.

The example network interface 714 includes hardware, firmware, and/or software to connect the computing system 700 to a communications network 718 such as the Internet. For example, the network interface 714 may include IEEE 802.X-compliant wireless and/or wired communications hardware for transmitting and/or receiving communications.

The example I/O interface 716 of FIG. 7 includes hardware, firmware, and/or software to connect one or more input/output devices 720 to the processor 702 for providing input to the processor 702 and/or providing output from the processor 702. For example, the I/O interface 716 may include a graphics processing unit for interfacing with a display device, a universal serial bus port for interfacing with one or more USB-compliant devices, a FireWire, a field bus, and/or any other type of interface. Example I/O device(s) 720 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The example processor 702 may access a non-transitory machine readable medium 722 via the I/O interface 716 and/or the I/O device(s) 720. Examples of the machine readable medium 722 of FIG. 7 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine readable media.

The example network interface 714 and/or the I/O interface 716 may communicate with the welding-type power supplies 102, 202 and/or with the indicator device(s) 162 of FIGS. 1 and/or 2 to communicate parameters and/or commands, and/or to output indicators based on indicator intervals and/or intermediate intervals.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made without departing from the scope of the appended claims. In addition, many modifications may be made to adapt a particular situation or material to the teachings of the present disclosure without departing from the appended claims. For example, systems, blocks, and/or other components of disclosed examples may be combined, divided, rearranged, and/or otherwise modified. Therefore, the present method and/or system are not limited to the particular implementations disclosed. Instead, the present method and/or system will include all implementations falling within the scope of the appended claims.

## Claims

1. A travel speed pacing system for welding-type operations, the system comprising:
an interface (114, 160; 300; 500) configured to receive an input (302, 304, 306, 308, 310, 312) describing a characteristic of a welding-type operation; and
control circuitry (112, 120; 702) configured to:
determine a target travel speed based on the input;
**characterised in that** it is further configured to:
determine a target time interval at which the welding-type operation is to traverse locations corresponding to successive ones of a plurality of marked locations (410) on the workpiece (146; 404) of the welding-type operation, the target time interval being based on the target travel speed and a unit distance between the marked locations; and
control the interface to output indicators representative of a target time interval.

2. The travel speed pacing system as defined in claim 1, wherein the interface (114, 160; 300; 500) is configured to receive as the input (302, 304, 306, 308, 310, 312) at least one of a material thickness of the workpiece, a wire diameter, a wire feed speed, a welding-type output current, or a welding-type output voltage.

3. The travel speed pacing system as defined in claim 1, wherein the control circuitry (112, 120, 702) is configured to determine the unit distance based on a unit distance input received via the interface (114, 160; 300; 500).

4. The travel speed pacing system as defined in claim 1, wherein the unit distance is a predetermined unit distance.

5. The travel speed pacing system as defined in claim 1, wherein the indicators comprise audible indicator sounds separated by the target time interval, and optionally wherein the control circuitry (112, 120; 702) is configured to:
determine an intermediate interval within the target time interval; and
control the interface (114, 160; 300; 500) to output audible intermediate sounds separated by the intermediate interval, wherein the audible intermediate sounds are different than the audible indicator sounds.

6. The travel speed pacing system as defined in claim 1, wherein the indicators comprise visible indicators separated by the target time interval.

7. The travel speed pacing system as defined in claim 1, wherein the indicators comprise haptic indicators separated by the target time interval.

8. The travel speed pacing system as defined in claim 1, wherein the interface (114, 160; 300; 500) is configured to receive the input (302, 304, 306, 308, 310, 312) via communications with an external device.

9. The travel speed pacing system as defined in claim 1, wherein the interface (114, 160; 300; 500) is configured to receive the input via obtaining and analyzing an optical image via an optical sensor.

10. The travel speed pacing system as defined in claim 1, wherein the interface (114, 160; 300; 500) is configured to receive a selection of a welding-type equipment, the options for input of the characteristic being determined based on the selection of the welding-type equipment.

11. The travel speed pacing system as defined in claim 1, wherein the control circuitry (112, 120; 702) is configured to control the interface (114, 160; 300; 500) to communicate the output indicators to an external device.

12. The travel speed pacing system as defined in claim 1, wherein the control circuitry (112, 120; 702) is configured to control a welding-type power supply (102; 202) to output the indicators via a welding-type arc.

13. The travel speed pacing system as defined in claim 1, wherein the control circuitry (112, 120; 702) is configured to:
control the interface (114, 160; 300; 500) to display a scale simulation of a simulated joint on a screen of the interface; and
control the interface to display a location indicator on the simulated joint and change the position of the location indicator on the simulated joint to match the target travel speed.

14. The travel speed pacing system as defined in claim 1, further comprising a stencil (402) having a plurality of apertures (408) corresponding to the plurality of marked locations (410), or wherein the interface (114, 160; 300; 500) and the control circuitry (112, 120; 702) are implemented on a mobile device or on welding equipment.

15. The travel speed pacing system as defined in claim 1, wherein the control circuitry comprises:
a first control circuitry (112, 120; 702) configured to determine the target travel speed based on the input; and
a second control circuitry (112, 120; 702) configured to:
determine the target time interval at which the welding-type operation is to traverse locations corresponding to successive ones of a plurality of marked locations (410) on the workpiece (146; 404), the target time interval being based on the target travel speed and a unit distance between the marked locations; and
control the interface to output indicators representative of the target time interval.

## Patentansprüche

1. Bewegungsgeschwindigkeitsstufensteuersystem für Schweißvorgänge, das System umfassend:
eine Schnittstelle (114, 160; 300; 500), die so eingerichtet ist, dass sie eine Eingabe (302, 304, 306, 308, 310, 312) empfängt, die eine Charakteristik eines Schweißvorgangs beschreibt; und
eine Steuerschaltung (112, 120; 702), die eingerichtet ist zum:
Bestimmen einer Zielbewegungsgeschwindigkeit basierend auf der Eingabe;
**dadurch gekennzeichnet, dass** sie ferner eingerichtet ist zum:
Bestimmen eines Zielzeitintervalls, bei dem der Schweißvorgang Orte, die aufeinanderfolgenden von mehreren markierten Orten (410) auf dem Werkstück (146; 404) des Schweißvorgangs entsprechen, durchläuft, wobei das Zielzeitintervall auf der Zielbewegungsgeschwindigkeit und einem Einheitsabstand zwischen den markierten Orten basiert; und
Steuern der Schnittstelle, um Indikatoren, die für ein Zielzeitintervall repräsentativ sind, auszugeben.

2. Bewegungsgeschwindigkeitsstufensteuersystem nach Anspruch 1, wobei die Schnittstelle (114, 160;300; 500) eingerichtet ist, als Eingabe (302, 304, 306, 308, 310, 312) mindestens eines von einer Materialdicke des Werkstücks, einem Drahtdurchmesser, einer Drahtzufuhrgeschwindigkeit, einem Schweißausgangsstrom oder einer Schweißvorgangsausgangsspannung zu empfangen.

3. Bewegungsgeschwindigkeitsstufensteuersystem nach Anspruch 1, wobei die Steuerschaltung (112, 120, 702) eingerichtet ist, den Einheitsabstand basierend auf einer Einheitsabstandseingabe zu bestimmen, die über die Schnittstelle (114, 160; 300; 500) empfangen wird.

4. Bewegungsgeschwindigkeitsstufensteuersystem nach Anspruch 1, wobei der Einheitsabstand ein vorbestimmter Einheitsabstand ist.

5. Bewegungsgeschwindigkeitsstufensteuersystem nach Anspruch 1, wobei die Indikatoren akustische Indikatortöne umfassen, die durch das Zielzeitintervall getrennt sind, und, optional, wobei die Steuerschaltung (112, 120; 702) konfiguriert ist zum:
Bestimmen eines Zwischenintervalls innerhalb des Zielzeitintervalls; und
Steuern der Schnittstelle (114, 160; 300; 500), um akustische Zwischentöne auszugeben, die durch das Zwischenintervall getrennt sind, wobei sich die akustischen Zwischentöne von den akustischen Indikatortönen unterscheiden.

6. Bewegungsgeschwindigkeitsstufensteuersystem nach Anspruch 1, wobei die Indikatoren sichtbare Indikatoren umfassen, die durch das Zielzeitintervall getrennt sind.

7. Bewegungsgeschwindigkeitsstufensteuersystem nach Anspruch 1, wobei die Indikatoren haptische Indikatoren umfassen, die durch das Zielzeitintervall getrennt sind.

8. Bewegungsgeschwindigkeitsstufensteuersystem nach Anspruch 1, wobei die Schnittstelle (114, 160; 300; 500) eingerichtet ist, die Eingabe (302, 304, 306, 308, 310, 312) mittels Kommunikationen mit einer externen Vorrichtung zu empfangen.

9. Bewegungsgeschwindigkeitsstufensteuersystem nach Anspruch 1, wobei die Schnittstelle (114, 160; 300; 500) eingerichtet ist, die Eingabe mittels Erhaltens und Analysierens eines optischen Bildes mittels eines optischen Sensors zu empfangen.

10. Bewegungsgeschwindigkeitsstufensteuersystem nach Anspruch 1, wobei die Schnittstelle (114, 160; 300; 500) eingerichtet ist, eine Auswahl einer Schweißvorgangsausrüstung zu empfangen, wobei die Eingabemöglichkeiten der Charakteristik basierend auf der Auswahl der Schweißvorgangsausrüstung bestimmt werden.

11. Bewegungsgeschwindigkeitsstufensteuersystem nach Anspruch 1, wobei die Steuerschaltung (112, 120; 702) eingerichtet ist, die Schnittstelle (114, 160; 300; 500) zu steuern, um die Ausgabeindikatoren an eine externe Vorrichtung zu übermitteln.

12. Bewegungsgeschwindigkeitsstufensteuersystem nach Anspruch 1, wobei die Steuerschaltung (112, 120; 702) eingerichtet ist, eine Schweißstromversorgung (102; 202) zu steuern, um die Indikatoren über einen Schweißlichtbogen auszugeben.

13. Bewegungsgeschwindigkeitsstufensteuersystem nach Anspruch 1, wobei die Steuerschaltung (112, 120; 702) eingerichtet ist zum:
Steuern der Schnittstelle (114, 160; 300; 500), um eine Skalensimulation eines simulierten Gelenks auf einem Bildschirm der Schnittstelle anzuzeigen; und Steuern der Schnittstelle, um einen Standortindikator auf dem simulierten Gelenk anzuzeigen und die Position des Standortindikators auf dem simulierten Gelenk zu ändern, um diese der Zielbewegungsgeschwindigkeit anzupassen.

14. Bewegungsgeschwindigkeitsstufensteuersystem nach Anspruch 1, ferner aufweisend eine Schablone (402) mit einer Vielzahl von Öffnungen (408), die der Vielzahl von markierten Orten (410) entsprechen, oder wobei die Schnittstelle (114, 160; 300; 500) und die Steuerschaltung (112, 120; 702) auf einer mobilen Vorrichtung oder auf einer Schweißausrüstung implementiert sind.

15. Bewegungsgeschwindigkeitsstufensteuersystem nach Anspruch 1, wobei die Steuerschaltung Folgendes aufweist:
eine erste Steuerschaltung (112, 120; 702), die eingerichtet ist, die Zielbewegungsgeschwindigkeit basierend auf der Eingabe zu bestimmen; und
eine zweite Steuerschaltung (112, 120; 702), die eingerichtet ist zum: Bestimmen des Zielzeitintervalls, bei dem der Schweißvorgang
Orte, die aufeinanderfolgenden von mehreren markierten Orten (410) auf dem Werkstück (146; 404) entsprechen, durchläuft, wobei das
Zielzeitintervall auf der Zielbewegungsgeschwindigkeit und einem Einheitsabstand zwischen den markierten Orten basiert; und
Steuern der Schnittstelle, um Indikatoren auszugeben, die für das Zielzeitintervall repräsentativ sind.

## Revendications

1. Système de stimulation de vitesse de déplacement pour des opérations de type soudage, le système comprenant :
une interface (114, 160 ; 300 ; 500) configurée pour recevoir une entrée (302, 304, 306, 308, 310, 312) décrivant une caractéristique d'une opération de type soudage ; et
un circuit de commande (112, 120 ; 702) configuré pour :
déterminer une vitesse de déplacement cible sur la base de l'entrée ;
**caractérisé en ce qu'**il est en outre configuré pour :
déterminer un intervalle de temps cible auquel l'opération de type soudage doit traverser des emplacements correspondant à des emplacements successifs d'une pluralité d'emplacements marqués (410) sur la pièce à usiner (146 ; 404) de l'opération de type soudage, l'intervalle de temps cible étant basé sur la vitesse de déplacement cible et une distance unitaire entre les emplacements marqués ; et
commander l'interface pour sortir des indicateurs représentatifs d'un intervalle de temps cible.

2. Système de stimulation de vitesse de déplacement selon la revendication 1, dans lequel l'interface (114, 160 ;
300 ; 500) est configuré pour recevoir en tant qu'entrée (302, 304, 306, 308, 310, 312) au moins une épaisseur de matériau de la pièce, un diamètre de fil, une vitesse d'alimentation de fil, un courant de sortie de type soudage, ou une tension de sortie de type soudage.

3. Système de stimulation de vitesse de déplacement selon la revendication 1, dans lequel le circuit de commande (112, 120, 702) est configuré pour déterminer la distance unitaire sur la base d'une entrée de distance unitaire reçue via l'interface (114, 160 ; 300 ; 500).

4. Système de stimulation de vitesse de déplacement selon la revendication 1, dans lequel la distance unitaire est une distance unitaire prédéterminée.

5. Système de stimulation de vitesse de déplacement selon la revendication 1, dans lequel les indicateurs comprennent des sons indicateurs audibles séparés par l'intervalle de temps cible, et facultativement dans lequel le circuit de commande (112, 120 ; 702) est configuré pour :
déterminer un intervalle intermédiaire dans l'intervalle de temps cible ; et
commander l'interface (114, 160 ; 300 ; 500) pour sortir des sons intermédiaires audibles séparés par l'intervalle intermédiaire, dans lequel les sons intermédiaires audibles sont différents des sons indicateurs audibles.

6. Système de stimulation de vitesse de déplacement selon la revendication 1, dans lequel les indicateurs comprennent des indicateurs visibles séparés par l'intervalle de temps cible.

7. Système de stimulation de vitesse de déplacement selon la revendication 1, dans lequel les indicateurs comprennent des indicateurs haptiques séparés par l'intervalle de temps cible.

8. Système de stimulation de vitesse de déplacement selon la revendication 1, dans lequel l'interface (114, 160 ; 300 ; 500) est configurée pour recevoir l'entrée (302, 304, 306, 308, 310, 312) via des communications avec un dispositif externe.

9. Système de stimulation de vitesse de déplacement selon la revendication 1, dans lequel l'interface (114, 160 ; 300 ; 500) est configurée pour recevoir l'entrée par l'intermédiaire de l'obtention et de l'analyse d'une image optique par l'intermédiaire d'un capteur optique.

10. Système de stimulation de vitesse de déplacement selon la revendication 1, dans lequel l'interface (114, 160 ; 300 ; 500) est configurée pour recevoir une sélection d'un équipement de type soudage, les options pour l'entrée de la caractéristique étant déterminées sur la base de la sélection de l'équipement de type soudage.

11. Système de stimulation de vitesse de déplacement selon la revendication 1, dans lequel le circuit de commande (112, 120 ; 702) est configuré pour commander l'interface (114, 160 ; 300 ; 500) pour communiquer les indicateurs de sortie à un dispositif externe.

12. Système de régulation de vitesse de déplacement selon la revendication 1, dans lequel le circuit de commande (112, 120 ; 702) est configuré pour commander une alimentation de type soudage (102 ; 202) pour sortir les indicateurs par l'intermédiaire d'un arc de type soudage.

13. Système d'alimentation de soudage selon la revendication 1, dans lequel le circuit de commande central (112, 120 ; 702) est en outre configuré pour :
commander l'interface (114, 160 ; 300 ; 500) pour afficher une simulation d'échelle d'une articulation simulée sur un écran de l'interface ; et commander l'interface pour afficher un indicateur de localisation sur l'articulation simulée et changer la position de l'indicateur de localisation sur l'articulation simulée pour correspondre à la vitesse de déplacement cible.

14. Système de stimulation de vitesse de déplacement selon la revendication 1, comprenant en outre un pochoir (402) ayant une pluralité d'ouvertures (408) correspondant à la pluralité d'emplacements marqués (410), ou dans lequel l'interface (114, 160 ; 300 ; 500) et le circuit de commande (112, 120 ; 702) sont mis en oeuvre sur un dispositif mobile ou sur un équipement de soudage.

15. Système de régulation de la vitesse de déplacement revendication 1, dans lequel la circuiterie de commande comprend :
un premier circuit de commande (112, 120; 702) configuré pour déterminer la vitesse de déplacement cible sur la base de l'entrée ; et
un deuxième circuit de commande (112, 120 ; 702) configuré pour : déterminer l'intervalle de temps cible auquel l'opération de type soudage doit
traverser des emplacements correspondant à des emplacements successifs parmi une pluralité d'emplacements marqués (410) sur la pièce (146 ; 404),
l'intervalle de temps cible étant basé sur la vitesse de déplacement cible et une distance unitaire entre les emplacements marqués ; et
commander l'interface pour sortir des indicateurs représentatifs d'un intervalle de temps cible.
